# FASCICULE DE BREVET EUROPEEN

(11) **EP 4 174 355 B1**
(45) Date de publication et mention de la délivrance du brevet: **25.09.2024**
(21) Numéro de dépôt: 22203670.9
(22) Date de dépôt: 25.10.2022
(51) Int. Cl.: F16L 23/00, F16L 23/16, F16L 23/18, F16L 23/24, B64D 37/30

(54) **ENSEMBLE DE CONNEXION OPTIMISE ENTRE DEUX PORTIONS D'UNE CANALISATION CRYOGENIQUE, COMPRENANT UNE DOUBLE BARRIERE D'ETANCHEITE, UNE CHAMBRE D'EXPANSION DE FLUIDE ET UN DETECTEUR DE PRESENCE DU FLUIDE DANS LADITE CHAMBRE**
OPTIMIERTE VERBINDUNGSANORDNUNG ZWISCHEN ZWEI TEILEN EINER KRYOGENEN ROHRLEITUNG MIT DOPPELTER DICHTUNGSBARRIERE, FLÜSSIGKEITSEXPANSIONSKAMMER UND EINEM SENSOR ZUR BESTIMMUNG DER FLÜSSIGKEIT IN DIESER KAMMER
OPTIMIZED CONNECTION ASSEMBLY BETWEEN TWO PORTIONS OF A CRYOGENIC PIPELINE, COMPRISING A DOUBLE SEALING BARRIER, A FLUID EXPANSION CHAMBER AND A DETECTOR FOR DETECTING THE PRESENCE OF FLUID IN SAID CHAMBER

(30) Priorité: 28.10.2021 FR 2111496
(43) Date de publication de la demande: 03.05.2023
(73) Titulaire: Airbus SAS, 31700 Blagnac (FR); Airbus Operations SAS, 31060 Toulouse (FR); Airbus Operations Ltd., Filton, Bristol BS99 7AR (GB)
(72) Inventeur: PEDOUSSAUT, Philippe, 31700 BLAGNAC (FR); TRESSOL, Hervé, 31060 TOULOUSE (FR); ERROUI, Najoua, 31060 TOULOUSE (FR); SHEBLI, Mouayiad, BRISTOL, BS99 7AR (GB)
(74) Mandataire: Cabinet Le Guen Maillet

(56) Documents cités:
- EP-A1- 2 058 573
- EP-A1- 2 256 393
- EP-A1- 3 734 133
- DE-A1- 4 130 593
- FR-A- 1 165 716
- US-A1- 2014 174 106

## Description

### DOMAINE TECHNIQUE

La présente invention concerne un ensemble de connexion entre deux portions d'une canalisation de transport d'un fluide cryogénique. L'invention concerne notamment un ensemble de connexion pour une canalisation d'hydrogène dans des systèmes d'aéronef.

### ÉTAT DE LA TECHNIQUE ANTÉRIEURE

L'hydrogène liquide est un fluide cryogénique qui peut être utilisé comme source d'énergie pour la production d'électricité. Ainsi, par exemple, il est possible d'utiliser une pile à hydrogène pour alimenter l'ensemble des systèmes de commande de vol et de communication d'un aéronef, ainsi que l'éclairage à bord et l'alimentation de différents dispositifs accessoires utilisés dans l'aéronef. L'hydrogène liquide peut également servir de source d'énergie pour la propulsion d'un aéronef, en alimentant une pile à combustible ou encore par combustion directe, ce qui présente l'avantage de ne rejeter que de l'eau dans l'atmosphère. L'utilisation d'hydrogène requiert des systèmes de distribution entre un ou des réservoirs de production ou de stockage et des dispositifs consommateurs. Ainsi des canalisations sont classiquement utilisées pour acheminer l'hydrogène liquide entre un réservoir de stockage et un dispositif consommateur tel que, par exemple, une pile à hydrogène. Les canalisations utilisées comprennent le plus souvent un tube intérieur, dans lequel circule le fluide transporté, et une paroi extérieure, séparée du tube intérieur par une ou plusieurs chambres d'isolation thermique placées sous vide. De telles canalisations, isolées thermiquement sous vide, sont des paires de tubes concentriques dans lesquelles les parois de tubes intérieur et extérieur sont maintenues à distance l'une de l'autre. Dans des canalisations adaptées au transport ou à la distribution d'un fluide cryogénique, l'isolation thermique réalisée entre le tube intérieur et la paroi extérieure permet à la fois de conserver le fluide à une température adaptée à sa distribution (bien en deçà de °C) et d'éviter une formation de glace autour de la paroi extérieure, laquelle serait alors de nature à générer des contraintes mécaniques sur des éléments voisins de l'installation de distribution, du fait de l'accroissement progressif du volume de glace accumulée autour de la canalisation.

Les canalisations de distribution de fluides cryogéniques sont fréquemment constituées d'une succession de tuyaux, flexibles ou rigides, isolés thermiquement sous vide, et assemblés entre eux au moyen d'éléments de connexion appropriés. C'est notamment le cas des canalisations utilisées pour le transfert d'oxygène liquide, d'azote liquide, d'argon liquide, d'hydrogène liquide, d'hélium liquide, par exemple. Les raccords (connexions) entre les différents tuyaux souples ou rigides qui composent la canalisation sont réalisés grâce à des couples de connecteurs. Chaque couple de connecteurs comprend un connecteur mâle agencé à l'extrémité d'un tuyau et configuré pour être inséré dans un connecteur femelle agencé à l'extrémité du tuyau voisin, et opérer une liaison mécanique coulissante serrée. L'étanchéité est obtenue simplement en utilisant un matériau à très faible expansion (coefficient de dilatation) pour le connecteur mâle et un matériau à bien plus forte expansion pour le connecteur femelle, de sorte que, lorsqu'un fluide cryogénique circule dans la canalisation, le connecteur femelle se rétracte sur le connecteur mâle pour opérer la liaison mécanique serrée à partir d'une liaison coulissante. L'étanchéité est renforcée par l'utilisation d'un joint torique placé entre les extrémités raccordées de deux tuyaux voisins. Un joint torique peut être disposé par exemple entre deux brides accolées respectivement disposées en retrait de l'embout mâle et à l'extrémité de l'embout femelle, ou encore entre l'extrémité de l'embout mâle et le fond de l'embout femelle. Ce type de jonction entre deux tuyaux voisins d'une même canalisation requiert toutefois que le connecteur mâle (ou embout mâle) soit inséré sur une grande longueur au regard du diamètre de la canalisation (jusqu'à plusieurs dizaines de centimètres) dans le connecteur femelle (ou embout femelle). Pour qu'une telle jonction soit étanche, les connecteurs mâle et femelle doivent, en plus d'être accouplés sur une longueur importante, être rigides. Une telle configuration n'est pas pratique dans le cas où une canalisation, et plus largement un système de distribution de fluide, doit être installé dans un espace restreint, comme c'est fréquemment le cas à bord d'un aéronef. De surcroît, une grande longueur d'insertion de l'embout mâle dans l'embout femelle implique de disposer d'un espace conséquent autour de la canalisation pour pouvoir procéder à la séparation de deux tuyaux voisins lors d'une opération de démontage.

Le document EP 2 058 573 A1 divulgue un ensemble de connexion par brides entre deux portions d'une canalisation pour le transport du fluide combustible dans des systèmes d'aéronef avec un détecteur de fuite.

Le document EP 2 256 393 A1 divulgue un ensemble de connexion par brides entre deux portions d'une canalisation pour le transport d'hydrogène.

La situation peut être améliorée.

### EXPOSÉ DE L'INVENTION

Un objet de la présente invention est de proposer des moyens de connexion entre deux portions de canalisation pour le transport d'un fluide cryogénique ne présentant pas au moins certains des inconvénients des solutions existantes.

A cet effet, il est proposé un ensemble de connexion par brides entre deux portions d'une canalisation pour le transport d'un fluide cryogénique dans un conduit intérieur de la canalisation, l'ensemble de connexion comprenant une première portion de canalisation et une deuxième portion de canalisation, la première portion de canalisation comprenant une première bride de connexion agencée à l'une de ses extrémités et configurée pour être maintenue en contact d'une deuxième bride de connexion, agencée à l'une des extrémités de la deuxième portion de canalisation, l'une au moins desdites première bride et deuxième bride comprenant une première gorge de positionnement d'un premier joint, agencé autour dudit tube intérieur et l'une au moins desdites première bride et deuxième bride comprenant une deuxième gorge de positionnement d'un deuxième joint, agencée autour de la première gorge de positionnement du premier joint, d'un diamètre supérieur au diamètre de la première gorge, les première et deuxième gorges étant configurées pour que les premier et deuxième joints qui y sont positionnées opèrent une liaison étanche entre les deux brides en isolant ledit conduit intérieur de l'extérieur de la canalisation, l'ensemble de connexion comprenant en outre au moins un conduit débouchant d'une part entre la première et la deuxième gorge, et débouchant d'autre part dans une chambre d'expansion dudit fluide cryogénique agencée dans l'une ou à proximité de l'une parmi la première et la deuxième bride de connexion, la chambre d'expansion comprenant un élément absorbant ainsi qu'un détecteur de présence dudit fluide cryogénique dans la chambre d'expansion de fluide cryogénique ou qu'un logement configuré pour l'installation d'un tel détecteur.

Avantageusement, il est ainsi possible d'opérer une connexion peu encombrante de deux portions de canalisation de fluide cryogénique tout en ayant la capacité de détecter une fuite avant diffusion du fluide à l'extérieur de la canalisation.

L'ensemble de connexion selon l'invention peut également comporter les caractéristiques suivantes, considérées seules ou en combinaison :
- Les première et deuxième gorges sont configurées pour le logement de joints toriques.
- Plusieurs conduits débouchent d'une part entre la première gorge et la deuxième gorge et débouchent d'autre part dans la chambre d'expansion de fluide cryogénique.
- Une extrémité d'un conduit débouchant entre les première et deuxième gorges débouche au fond d'une rainure agencée dans l'une des première et deuxième brides, entre les première gorge et deuxième gorges.
- L'une au moins des première et deuxième brides comprend une troisième gorge de positionnement d'un troisième joint, présentant un diamètre inférieur au diamètre de la première gorge, agencée entre le conduit intérieur et la première gorge.

L'invention a également pour objet un système de distribution d'hydrogène liquide comprenant un ensemble de connexion tel que précédemment décrit.

Un autre objet de l'invention est un aéronef comprenant un ensemble de connexion entre deux portions de canalisation tel que précité ou un système de distribution d'hydrogène liquide comprenant un tel ensemble.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une coupe représentant globalement un ensemble de connexion entre deux portions à joindre d'une même canalisation, selon un mode de réalisation, avant connexion (avant assemblage de l'ensemble de connexion) ;
[Fig. 2] est une coupe représentant l'ensemble de connexion entre deux portions jointes d'une canalisation, déjà représenté sur la Fig. 1, après connexion des deux portions de canalisation ;
[Fig. 3] est une coupe représentant l'ensemble de connexion assemblé déjà représenté sur la Fig. 2 équipé d'un capteur de détection de présence d'un fluide cryogénique configuré pour détecter la présence de fluide dans une chambre d'expansion de l'ensemble de connexion ;
[Fig. 4] est une coupe qui représente une portion modifiée de l'ensemble de connexion déjà représenté sur les Fig. 1 à Fig. 3, selon une première variante de réalisation;
[Fig. 5] est une coupe qui représente une portion modifiée de l'ensemble de connexion déjà représenté sur les Fig. 1 à Fig. 3, selon une seconde variante de réalisation;
[Fig. 6] est une vue en perspective représentant une troisième variante de l'ensemble de connexion entre les portions de canalisation, selon un mode de réalisation ;
[Fig. 7] est une vue partielle en perspective illustrant des détails d'implémentation de l'ensemble de connexion déjà représenté sur la Fig. 6 ; et,
[Fig. 8] illustre une vue de dessus d'un aéronef comprenant un ensemble de connexion entre deux portions d'une canalisation, tel que déjà illustré sur les figures Fig. 1 à Fig. 7.

### EXPOSÉ DÉTAILLÉ DE MODES DE RÉALISATION

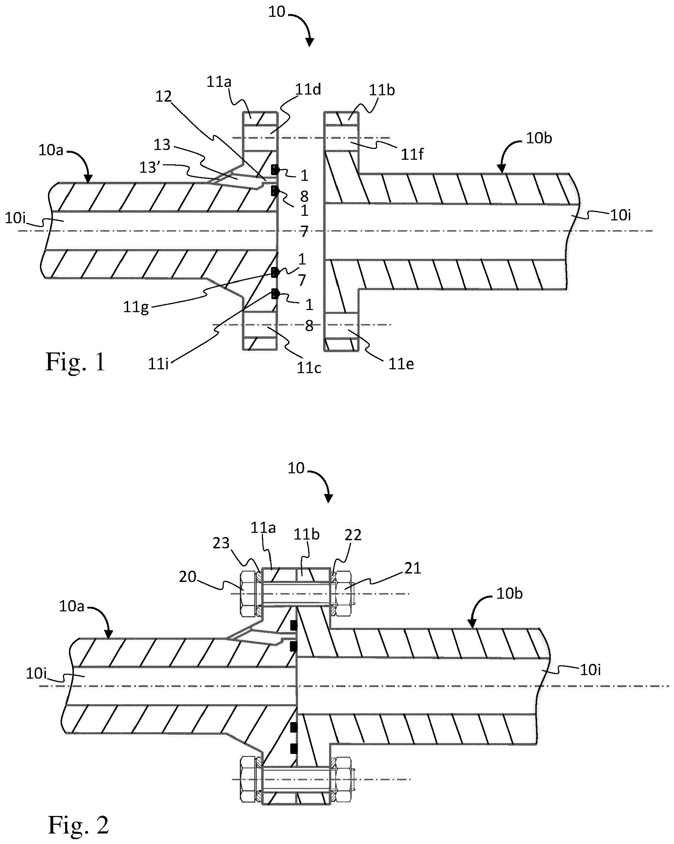

La Fig. 1 représente de façon schématique un ensemble de connexion 10 entre une première portion 10a d'une canalisation et une deuxième portion 10b de cette même canalisation, selon un mode de réalisation.

Selon ce mode de réalisation, la canalisation représentée est configurée pour le transport d'un fluide cryogénique et comprend d'autres portions de canalisation que les portions 10a et 10b. Selon l'exemple décrit, la canalisation représentée est configurée pour le transport d'hydrogène liquide et plus précisément pour la distribution d'hydrogène liquide à bord d'un aéronef.

Les portions de la canalisation autres que les portions 10a et 10b ne sont pas représentées ici dans la mesure où l'invention porte sur un ensemble de connexion entre deux portions voisines d'une même canalisation, connectée ou à connecter l'une à l'autre, et que la description de l'une seulement des connexions entre deux portions de la canalisation, voisines l'une de l'autre, est nécessaire à une bonne compréhension de l'invention.

Le terme « connexion » est à interpréter ici comme synonyme de jonction, de liaison, de branchement ou de raccordement des deux portions 10a et 10b de la canalisation de distribution d'hydrogène liquide. On entend par connexion étanche une connexion réalisée de sorte à empêcher le fluide présent dans un conduit intérieur à la canalisation de fuir librement à l'extérieur de la canalisation, ailleurs que dans un conduit ou une chambre d'expansion de fluide de la canalisation. Les termes « chambre d'expansion » désignent ici un volume de la canalisation, intérieur à la canalisation ou raccordé à un conduit intérieur de la canalisation, lequel volume est clos (non ouvert sur l'environnement extérieur à la canalisation) lors d'un usage normal de la canalisation, et qui permet au fluide transporté dans la canalisation de s'y répandre sous certaines conditions telles que, par exemple, un problème d'étanchéité d'une jonction de 1a canalisation normalement étanche.

Chacune des portions 10a et 10b de canalisation comprend un conduit intérieur 10i ou plus exactement une portion d'un conduit intérieur 10i de sorte que quand les portions de canalisation sont connectées entre elles, c'est-à-dire jointe de façon étanche, un conduit intérieur 10i étanche est créé, par la continuité des portions de conduit 10i de chacune des portions 10a et 10b assemblées de canalisation.

Chacune des portions 10a et 10b de canalisation comprend une bride de connexion destinée à être maintenue fixée au contact et en regard de la bride de connexion de l'autre portion de canalisation. Ainsi la portion 10a de canalisation comprend une bride 11a et la portion 10b de canalisation comprend une bride 11b destinée à être maintenue fixée à la bride de connexion 11a de la portion 10a de canalisation. Les brides de canalisation 11a et 11b sont configurées pour être maintenues l'une au contact et en regard de l'autre, de sorte qu'après assemblage de l'ensemble de connexion 10, les brides assurent la fixation et le maintien de la portion 10a de canalisation avec la portion 10b de canalisation tout en assurant la continuité du conduit interne 10i de la canalisation, par mise en regard des deux portions du conduit 10i, respectivement agencées dans la portion 10a de canalisation et dans la portion 10b de canalisation. Le terme « bride de connexion » désigne ici une terminaison ou partie terminale d'une portion de canalisation qui suit un épaulement proche d'une extrémité de la portion de canalisation, dans le prolongement des parois extérieures de la canalisation, et qui est agencée pour recevoir des moyens de fixation à une bride de forme similaire, en vue de maintenir les deux brides similaires fixées l'une à l'autre pour prolonger la canalisation par fixation d'une portion additionnelle de canalisation. Le corps longitudinal d'une portion de canalisation peut être souple ou rigide et une bride de connexion peut être assemblée aux parois extérieures et intérieures par soudage, vissage ou moulage, par exemple. Selon un mode de réalisation de l'invention, les brides 11a et 11b des portions de canalisation 10a et 10b comprennent chacune des usinages ou trous de passage configurés pour recevoir des boulons en vue d'une connexion par des brides entre elles au moyen de ces boulons (ensembles vis et écrou). Selon l'exemple décrit, la bride de connexion 11a comprend plusieurs usinages 11c et 11d et la bride de connexion 11b comprends plusieurs usinages 11e et 11f. Seuls les usinages 11c, 11d, 11e et 11f présents dans le plan de coupe sont représentés sur la Fig. 1. Sur 1a Fig. 1 le plan de coupe est un plan de coupe vertical comprenant notamment un axe longitudinal de la canalisation de transport d'hydrogène liquide.

Selon un mode de réalisation, la bride de connexion 11a de l'ensemble de connexion 10 comprend une première gorge 11g, circulaire et concentrique avec une section du tube intérieur 10i de la portion 10a de canalisation, configurée pour recevoir un joint torique d'étanchéité 17.

La gorge 11g de positionnement du joint torique 17 est agencée parallèlement au plan de surface de la bride de connexion 11a configuré pour prendre appui sur le plan de surface similaire de la bride 11b, de sorte que le joint torique 17 d'étanchéité opère une barrière entre le tube intérieur 10i de la canalisation et l'environnement extérieur au joint torique.

Astucieusement, la connexion entre les brides de connexion 11a et 11b comprend au moins deux joints toriques d'étanchéité et une chambre d'expansion 13 de fluide débouchant entre ces deux joints toriques d'étanchéité. Ainsi, une deuxième gorge 11i de positionnement d'un joint torique d'étanchéité, circulaire elle aussi, et concentrique avec la première gorge 11g et une section du tube intérieur 10i, est agencée dans la bride de connexion 11a de l'ensemble de connexion 10. Cette deuxième gorge 11i de positionnement d'un joint torique d'étanchéité présente un diamètre supérieur au diamètre de la première gorge 11g et est configurée pour le positionnement d'un deuxième joint 18 d'étanchéité. Ainsi les deux joints toriques 17 et 18 d'étanchéité offrent conjointement une double barrière étanche à un fluide présent dans le tube intérieur 10i de la canalisation, au niveau de la connexion entre les portions 10a et 10b de canalisation, afin d'éviter que ce fluide ne puisse s'échapper dans l'environnement extérieur à la canalisation. Astucieusement encore, une chambre d'expansion 13, prévue pour recevoir un épanchement de fluide en cas de défaillance du premier joint torique 17, est agencée dans la bride 11a. Cette chambre d'expansion 13 de fluide est reliée à l'espace résiduel disponible entre les joints toriques d'étanchéité 17 et 18, par le biais d'un conduit 12. Les termes « volume d'espace résiduel » désignent ici un volume d'espace disponible entre les surfaces de liaison (ou de contact) des brides de connexion 11a et 11b, délimité par les joints toriques 17 et 18 d'étanchéité lorsque les brides de connexion 11a et 11b sont assemblées (maintenues fixées et en contact l'une de l'autre). La chambre d'expansion 13 de fluide comprend une ouverture 13' sur l'extérieur, adapté au positionnement et au maintien d'un dispositif capteur de présence d'hydrogène liquide. L'ouverture 13' prend la forme d'un col configuré pour recevoir un joint torique d'étanchéité. Ainsi, si le premier joint torique 17 constituant une barrière étanche, faisant obstacle au fluide présent dans le tube intérieur 10i, vient à se rompre ou à se déformer, totalement ou partiellement, ou encore à se désagréger, par exemple sous l'effet de contraintes thermiques répétées ou encore sous l'effet d'un vieillissement, l'hydrogène liquide présent dans le conduit intérieur 10i de la canalisation occupe tout ou partie du volume d'espace résiduel disponible entre les joints toriques 17 et 18 et se répand jusqu'à la chambre d'expansion 13 à travers le conduit 12. La chambre d'expansion 13 étant configurée pour comprendre ou recevoir un dispositif capteur de présence de l'hydrogène dans la chambre d'expansion 13, il est avantageusement possible de détecter une fuite avant que le fluide n'ait la capacité de se répandre à l'extérieur de la canalisation. Grâce à l'ensemble de connexion 10, il est possible de disposer d'une connexion peu encombrante, ou à tout le moins bien moins encombrante qu'une connexion de type baïonnette telle que celles selon l'art antérieur tout sécurisant la connexion contre le risque de fuite.

Bien entendu, d'autres implémentations de la double barrière étanche constituée des deux joints toriques concentriques sont possibles et l'exemple d'implémentation précédemment décrit n'est pas limitatif. Selon une variante, les gorges 11g et 11i sont agencées dans la surface de liaison de la bride 11b, et non pas de la bride 11a, et la chambre d'expansion est agencée dans la bride de connexion 11a. Selon une autre variante encore, l'une des gorges 11g et 11i et agencée dans la bride de connexion 1 1a et l'autre, parmi les gorges 11g et 11i, est agencée dans la bride de connexion 11b. Selon une variante encore, la chambre d'expansion de fluide est agencée dans la bride de connexion 11b. Selon une variante encore, une pluralité de conduits similaires au conduit 12 sont agencés entre l'espace résiduel disponible entre les joints toriques 17 et 18, et donc entre les gorges concentriques 11g et 11i, d'une part et la chambre d'expansion 13 de fluide, d'autre part, de sorte à optimiser la propension de propagation du fluide dans la chambre d'expansion 13, et donc la capacité à détecter rapidement une défaillance du premier joint torique d'étanchéité 17, par une détection rapide de présence du fluide dans la chambre d'expansion 13 de fluide.

Selon une variante du mode de réalisation, les gorges 11g et 11i de positionnement des joints toriques 17 et 18 d'étanchéité ne sont pas concentriques. Il suffit en effet que la première gorge 11g entoure la section terminale du conduit intérieur 10i pour pouvoir opérer une première barrière normalement étanche dans le plan de liaison de la connexion entre les brides de connexion 11a et 11b lorsqu'elle contient le premier joint torique 17 d'étanchéité. De façon similaire, il suffit que la deuxième gorge 11i de positionnement du joint torique 18 d'étanchéité entoure la première gorge 11g pour pouvoir opérer une deuxième barrière normalement étanche dans le plan de liaison de la connexion entre les brides de connexion 11a et 11b lorsqu'elle contient le deuxième joint torique 18 d'étanchéité. Le principe de détection rapide d'un épanchement de fluide entre la première barrière et la deuxième barrière ainsi constituées est efficace dès lors qu'un ou plusieurs conduits de liaison débouchent d'une part entre le volume d'espace résiduel entre les joints toriques 17 et 18 et d'autre part dans la chambre d'expansion 13 de fluide. Bien évidemment, d'autres joints que des joints toriques peuvent être utilisés, tel que par exemple des joints annulaires plats. L'homme du métier saura choisir un type de joint adapté à la création d'une liaison étanche entre les brides de connexion 11a et 11b en considérant notamment la forme des gorges 11g et 11i, ainsi que les différentes contraintes susceptibles de s'appliquer à l'ensemble de connexion, par exemple des températures très en deçà de 0°C, voire même inférieures à 250°C, propres au transport ou à la présence d'un fluide cryogénique. Ainsi, selon des variantes encore, les différents éléments décrits sont configurés pour le transport d'un fluide cryogénique autre que de l'hydrogène liquide, tel que, à titre d'exemples non limitatifs, de l'azote, de l'argon liquide, de l'hélium, etc.

Selon l'invention, la chambre d'expansion 13 de fluide comprend un élément absorbant, préférentiellement spongieux, pour optimiser la répartition de fluide dans la chambre et opérer une fonction tampon.

La **Fig. 2** représente les brides de connexion 11a et 11b de l'ensemble de connexion 10 utilisé pour une connexion des portions 10a et 10 b de canalisation, après assemblage au moyen de boulons dans les différents trous traversant 11c, 11d, 11e et 11f agencés dans les brides de connexion, selon un mode de réalisation. Les boulons sont constitués chacun d'une vis 20 et d'un écrou 21 opérant respectivement un serrage des brides 11a et 11b l'une contre l'autre via des rondelles 23 et 22. Selon un autre mode de réalisation, le maintien des brides de connexion 11a et 11b, l'une contre l'autre, est opéré grâce à un collier de type V-clamp qui entoure simultanément les brides 11a et 11b et qui est lui-même maintenu par serrage sur les brides. De tels colliers sont bien connus de l'homme du métier. Selon un mode de réalisation, quatre boulons maintiennent les brides de connexion 11a et 11b en position d'appui l'une contre l'autre. Selon une variante, huit boulons maintiennent les deux brides assemblées l'une contre l'autre. Ces exemples n'étant bien sûr pas limitatifs et plus de boulons peuvent être utilisés en fonction du diamètre de la canalisation et des brides de connexion 11a et 11b.

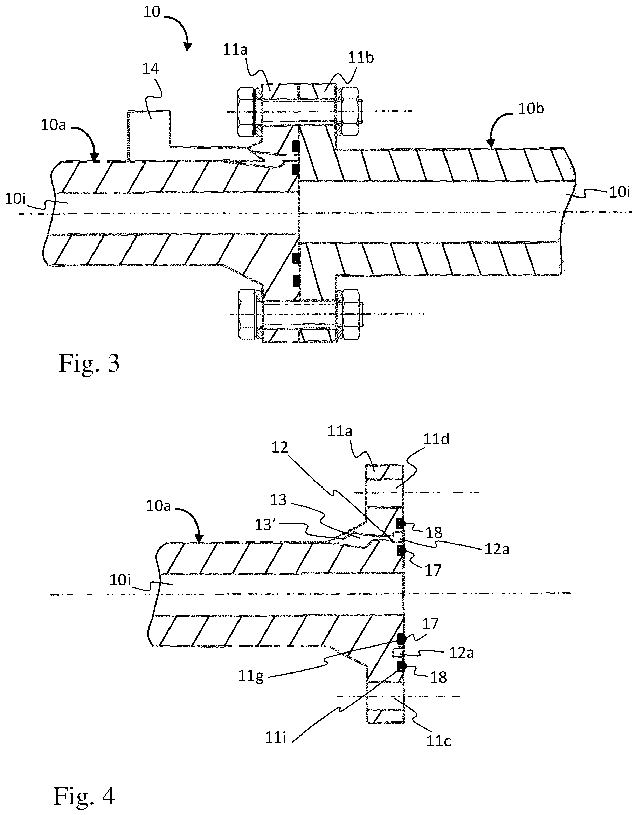

La **Fig. 3** illustre le positionnement d'un dispositif capteur 14 de présence de fluide dans la chambre d'expansion 13, agencé sur l'ensemble de connexion 10. Selon un mode de réalisation le dispositif capteur 14 de présence de fluide dans la chambre d'expansion 13 est maintenu vissé sur la bride de connexion 11a et la liaison entre le corps du dispositif capteur 14 et l'ouverture 13' est rendue étanche par la présence d'un joint torique d'étanchéité ou de colle étanche.

Selon un mode de réalisation de l'invention, le dispositif capteur 14 est alimenté en énergie électrique au moyen d'une paire de câbles non représentés sur la Fig. 3 et communique avec un dispositif distant par liaison sans fil, le dispositif distant opérant des fonctions de centralisateur d'informations représentatives chacune de la présence d'un fluide dans une chambre d'expansion de la canalisation. Selon une variante, le dispositif capteur 14 communique avec un dispositif distant par modulation de signal superposé au potentiel électrique de ses lignes d'alimentation électrique. Selon une variante encore, un conducteur additionnel est dédié à la transmission d'un signal représentatif de la présence de fluide dans la chambre d'expansion 13, entre le dispositif capteur 14 et un dispositif de contrôle distant. Le dispositif de contrôle distant est configuré pour recevoir un tel signal et pour contrôler à distance, le cas échéant, la fermeture d'une vanne disposée en amont de la portion de canalisation comprenant la chambre d'expansion 13. Selon un mode de réalisation de l'invention, une vanne de contrôle du flux de fluide est directement intégrée à l'une des portions de canalisation 10a et 10b, selon le sens du fluide, permettant d'interrompre l'approvisionnement de fluide dans le conduit intérieur 10i de la canalisation. Selon un mode de réalisation chacune des portions de canalisation comprend une vanne d'isolement configurée pour opérer une interruption de l'approvisionnement de fluide vers cette portion de canalisation ou à partir de cette portion de canalisation. Selon une autre variante du mode de réalisation, il n'est pas fait usage d'un dispositif centralisateur distant et chaque portion de canalisation comprend une vanne d'isolement susceptible d'interrompre le transfert de fluide dans sa propre portion de conduit intérieur 10i, à partir d'une information délivrée par un dispositif capteur de présence de fluide agissant tel que précédemment décrit, présent sur la même portion de canalisation que la vanne d'isolement.

La **Fig. 4** illustre une variante d'implémentation de la bride de connexion 11a comprenant les gorges 11g et 11i de positionnement des joints toriques 17 et 18 d'étanchéité de l'ensemble de connexion 10. Selon cette variante, le ou les conduits de liaison entre l'espace résiduel disponible entre les joints 17 et 18 d'étanchéité d'une part, et la chambre 13 d'expansion, d'autre part, débouchent au fond d'une rainure annulaire 12a usinée dans la surface de liaison de la bride 11a (surface de contact avec la bride 11b, après assemblage de la connexion). Ainsi, l'espace résiduel disponible comprend à minima le volume de la rainure circulaire 12a usinée dans la bride, ce qui permet, en présence d'une fuite au niveau du joint 17 d'étanchéité, de faciliter un épanchement du fluide vers la chambre d'expansion 13 de fluide, de sorte à accélérer la diffusion du fluide vers la chambre d'expansion, et donc la détection de la fuite et la mise en oeuvre des éventuelles opérations subséquentes (fermeture d'une vanne ou plusieurs vannes d'isolement, par exemple). Ceci est d'autant plus vrai lorsque la bride de connexion 11a comprend un nombre accru de conduits similaires au conduit 12.

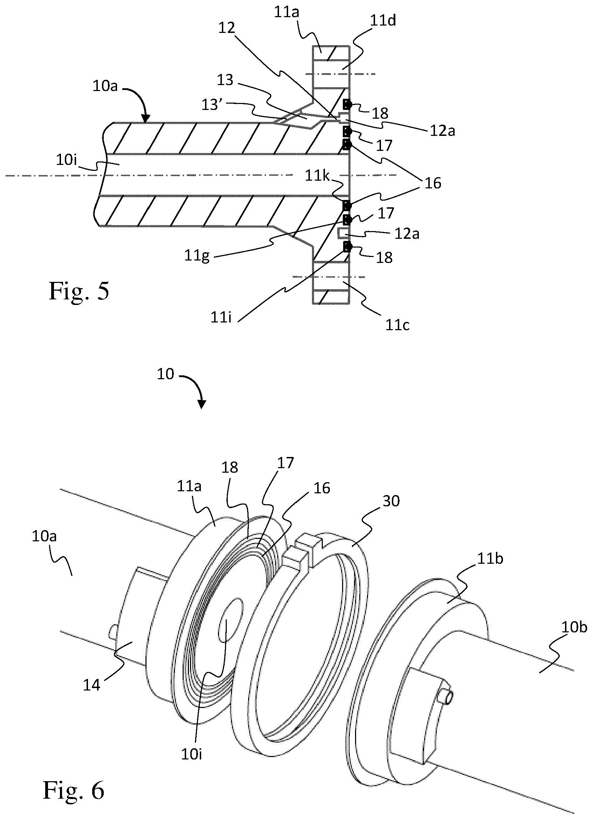

La **Fig. 5** illustre une variante de la bride de connexion 11a dans laquelle la première barrière d'étanchéité disposée entre le conduit intérieur 10i de la canalisation et un ou plusieurs conduits de liaison vers la chambre d'expansion est doublée par l'agencement d'une troisième gorge 11k de positionnement d'un troisième joint torique 16 d'étanchéité de la connexion entre les brides de connexion 11a et 11b et donc entre les portions 10a et 10b de canalisation. Avantageusement, cela permet de maintenir la connexion étanche opérationnelle plus longtemps avant détection d'une fuite, puisque deux défauts d'étanchéité respectivement liés aux joints toriques 16 et 17 d'étanchéité doivent alors être présents pour qu'une détection d'une fuite jusqu'à la chambre d'expansion 13 de fluide soit possible.

Selon une variante, la troisième gorge 11k et le troisième joint d'étanchéité 16 positionné dans la troisième gorge 11k sont agencés en périphérie du deuxième joint 18 d'étanchéité de sorte à mieux limiter un risque de fuite vers l'environnement extérieur à la canalisation en cas de fuite de fluide vers la chambre d'expansion 13, en présence d'un défaut d'étanchéité en lien avec le premier joint 17 d'étanchéité. Avantageusement, cela permet d'obtenir de meilleures chances de préserver l'environnement extérieur à la canalisation en cas de fuite de la première barrière d'étanchéité, par exemple le temps d'opérer des actions subséquentes à la détection d'une telle fuite, telle que la fermeture d'une vanne, ou encore une quelconque action visant à assurer la sécurité des systèmes autour de la canalisation.

La **Fig. 6** illustre en perspective une variante d'implémentation de l'ensemble de connexion 10 selon laquelle les brides 11a et 11b ne sont pas assemblées et maintenues l'une contre l'autre au moyen de boulons mais grâce à un collier de raccordement 30 de type V-clamp configuré pour encercler, après montage du collier, les brides de connexion 11a et 11b respectivement agencées en partie terminale des portions de canalisation 10a et 10b. Selon la variante représentée, trois joints toriques 16, 17 et 18 opèrent une barrière d'étanchéité entre le conduit intérieur 10i de la canalisation et l'environnement extérieur à la canalisation. Un dispositif capteur 14 de présence de fluide dans la chambre d'expansion 13 est fixé sur la paroi extérieure de la portion 10a de canalisation, idéalement positionné au plus près de la bride 11a comprenant la chambre d'expansion 13 de fluide recevant du fluide en cas de fuite de la première barrière d'étanchéité.

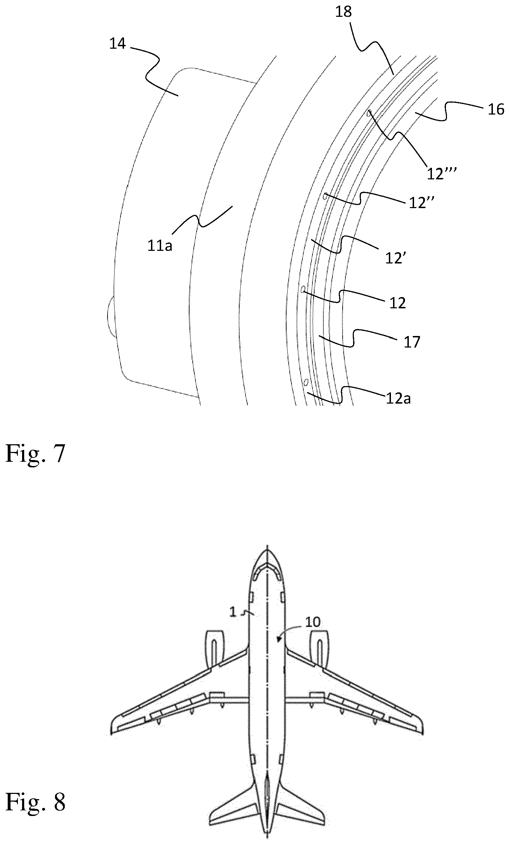

La **Fig. 7** illustre des détails de l'ensemble de connexion 10 selon le mode de réalisation déjà représenté sur la Fig. 6. Il est possible d'y voir notamment des portions de conduits de liaison 12, 12', 12" et 12'" qui débouchent tous dans la gorge 12a usinée dans la surface de contact entre la bride 11a et la bride 11b lorsque l'ensemble de connexion est assemblé.

Selon cette configuration, deux joints toriques d'isolation 16 et 17 sont configurés pour opérer une première barrière d'étanchéité entre le conduit intérieur 10a de la canalisation et la rainure 12a ouvrant vers les conduits 12, 12', 12" et 12'" de liaison à la chambre d'expansion 13 de fluide, et un joint torique d'étanchéité 18 est configuré pour opérer une deuxième barrière d'étanchéité entre l'espace résiduel entre les joints 17 et 18 comprenant la rainure 12a, d'une part, et l'environnement extérieur à la canalisation, d'autre part.

La **Fig. 8** représente un aéronef 1 comprenant une pile à hydrogène et un système de distribution d'hydrogène liquide comprenant l'ensemble de connexion 10 ainsi que d'autres ensembles de connexion similaires à l'ensemble de connexion 10. Avantageusement, l'usage de tels ensembles de connexion, pareils à l'ensemble de connexion 10 permet l'installation d'un système de distribution d'hydrogène liquide, entre un réservoir de stockage d'hydrogène et la pile à combustible de l'aéronef 1. Ceci est particulièrement avantageux à bord d'un aéronef.

## Revendications

1. Ensemble de connexion (10) par brides entre deux portions (10a, 10b) d'une canalisation pour le transport d'un fluide cryogénique dans un conduit intérieur (10i) de la canalisation, l'ensemble de connexion (10) comprenant une première portion (10a) de canalisation et une deuxième portion (10b) de canalisation, la première portion (10a) de canalisation comprenant une première bride de connexion (11a) agencée à l'une de ses extrémités et configurée pour être maintenue en contact d'une deuxième bride de connexion (11b), agencée à l'une des extrémités de la deuxième portion (10b) de canalisation, l'une au moins desdites première bride (11a) et deuxième bride (11b) comprenant une première gorge (11g) de positionnement d'un premier joint (17), agencée autour dudit tube intérieur (10i) et l'une au moins desdites première bride (11a) et deuxième bride (11b) comprenant une deuxième gorge (11i) de positionnement d'un deuxième joint (18), agencée autour de ladite première gorge (11g) de positionnement du premier joint (17), d'un diamètre supérieur au diamètre de la première gorge (11g), les première (11g) et deuxième (11i) gorges étant configurées pour que les premier (17) et deuxième (18) joints qui y sont positionnées opèrent une liaison étanche entre les deux brides (11a, 11b) en isolant ledit conduit intérieur (10i) de l'extérieur de la canalisation, l'ensemble de connexion (10) comprenant en outre au moins un conduit (12) débouchant d'une part entre la première (11g) et la deuxième (11i) gorge, et débouchant d'autre part dans une chambre d'expansion (13) dudit fluide cryogénique agencée dans l'une parmi la première (11a) et la deuxième (11b) bride de connexion, **caractérisé par** la chambre d'expansion (13) comprenant un élément absorbant ainsi qu'un détecteur de présence dudit fluide cryogénique ou qu'un logement configuré pour l'installation d'un tel détecteur.

2. Ensemble de connexion (10) selon la revendication précédente, dans lequel les première et deuxième gorges sont configurées pour le logement de joints toriques.

3. Ensemble de connexion selon l'une des revendications 1 et 2, dans lequel plusieurs conduits (12, 12', 12", 12"') débouchent chacun d'une part entre la première gorge (11g) et la deuxième gorge (11i) et débouchent d'autre part dans ladite chambre d'expansion (13) de fluide cryogénique.

4. Ensemble de connexion (10) selon l'une des revendications 1 à 3, dans lequel une extrémité d'un conduit (12) débouchant entre les première et deuxième gorges débouche au fond d'une rainure (12a) agencée dans l'une des première (11a) et deuxième (11b) brides, entre les première (11g) et deuxième (11i) gorges.

5. Ensemble de connexion (10) selon l'une des revendications précédentes, dans lequel l'une au moins des première (11a) et deuxième (11b) brides comprend une troisième gorge (11k) de positionnement d'un troisième joint, présentant un diamètre inférieur au diamètre de ladite première gorge (11g), agencée entre ledit conduit intérieur (11i) et ladite première gorge (11g).

6. Système de distribution d'un fluide cryogénique comprenant au moins un ensemble de connexion (10) selon l'une des revendications 1 à 5.

7. Aéronef (1) comprenant un ensemble de connexion (10) selon l'une des revendications 1 à 5 ou un système de distribution d'un fluide cryogénique selon la revendication 6.

## Patentansprüche

1. Verbindungsanordnung (10) zur Verbindung durch Flansche zwischen zwei Abschnitten (10a, 10b) einer Rohrleitung für den Transport eines kryogenen Fluids in einem inneren Kanal (10i) der Rohrleitung, wobei die Verbindungsanordnung (10) einen ersten Rohrleitungsabschnitt (10a) und einen zweiten Rohrleitungsabschnitt (10b) umfasst, wobei der erste Rohrleitungsabschnitt (10a) einen ersten Verbindungsflansch (11a) umfasst, der an einem seiner Enden angeordnet ist und dafür ausgelegt ist, in Kontakt mit einem zweiten Verbindungsflansch (11b) gehalten zu werden, der an einem der Enden des zweiten Rohrleitungsabschnitts (10b) angeordnet ist, wobei mindestens einer von dem ersten Flansch (11a) und dem zweiten Flansch (11b) eine erste Nut (11g) zur Positionierung einer ersten Dichtung (17) umfasst, die um das innere Rohr (10i) herum angeordnet ist, und mindestens einer von dem ersten Flansch (11a) und dem zweiten Flansch (11b) eine zweite Nut (11i) zur Positionierung einer zweiten Dichtung (18) umfasst, die um die erste Nut (11g) zur Positionierung der ersten Dichtung (17) herum angeordnet ist, mit einem Durchmesser, der größer als der Durchmesser der ersten Nut (11g) ist, wobei die erste (11g) und zweite (11i) Nut dafür ausgelegt sind, dass die erste (17) und die zweite (18) Dichtung, die hier positioniert sind, eine dichte Verbindung zwischen den zwei Flanschen (11a, 11b) bewirken, indem sie den inneren Kanal (10i) von der Außenseite der Rohrleitung isolieren, wobei die Verbindungsanordnung (10) außerdem mindestens einen Kanal (12) umfasst, der einerseits zwischen der ersten (11g) und der zweiten (11i) Nut mündet und andererseits in eine Expansionskammer (13) für das kryogene Fluids mündet, die in einem von dem ersten (11a) und dem zweiten (11b) Verbindungsflansch angeordnet ist, **dadurch gekennzeichnet, dass** die Expansionskammer (13) ein absorbierendes Element sowie einen Anwesenheitsdetektor für das kryogene Fluid oder eine Aufnahme, die für den Einbau eines solchen Detektors ausgelegt ist, umfasst.

2. Verbindungsanordnung (10) nach dem vorhergehenden Anspruch, wobei die erste und die zweite Nut für die Aufnahme von O-Ringen ausgelegt sind.

3. Verbindungsanordnung nach einem der Ansprüche 1 und 2, wobei mehrere Kanäle (12, 12', 12", 12‴) jeweils einerseits zwischen der ersten Nut (11g) und der zweiten Nut (11i) münden und andererseits in die Expansionskammer (13) für das kryogene Fluid münden.

4. Verbindungsanordnung (10) nach einem der Ansprüche 1 bis 3, wobei ein Ende eines Kanals (12), der zwischen der ersten und der zweiten Nut mündet, am Boden einer Rille (12a) mündet, die in einem von dem ersten (11a) und dem zweiten (11b) Flansch zwischen der ersten (11g) und der zweiten (11i) Nut angeordnet ist.

5. Verbindungsanordnung (10) nach einem der vorhergehenden Ansprüche, wobei mindestens einer von dem ersten (11a) und dem zweiten (11b) Flansch eine dritte Nut (11k) zur Positionierung einer dritten Dichtung umfasst, die einen Durchmesser aufweist, der kleiner als der Durchmesser der ersten Nut (11g) ist, und zwischen dem inneren Kanal (11i) und der ersten Nut (11g) angeordnet ist.

6. System zur Verteilung eines kryogenen Fluids, welches mindestens eine Verbindungsanordnung (10) nach einem der Ansprüche 1 bis 5 umfasst.

7. Luftfahrzeug (1), welches eine Verbindungsanordnung (10) nach einem der Ansprüche 1 bis 5 oder ein System zur Verteilung eines kryogenen Fluids nach Anspruch 6 umfasst.

## Claims

1. Flange-connection assembly (10) between two portions (10a, 10b) of a line for transporting a cryogenic fluid in an inner conduit (10i) of the line, the connection assembly (10) comprising a first line portion (10a) and a second line portion (10b), the first line portion (10a) comprising a first connection flange (11a) arranged at one of its ends and configured to be held in contact with a second connection flange (11b), arranged at one of the ends of the second line portion (10b), at least one of said first flange (11a) and second flange (11b) comprising a first groove (11g) for positioning a first seal (17), said first groove being arranged around said inner tube (10i), and at least one of said first flange (11a) and second flange (11b) comprising a second groove (11i) for positioning a second seal (18), said second groove being arranged around said first groove (11g) for positioning the first seal (17) and having a diameter greater than the diameter of the first groove (11g), the first groove (11g) and second groove (11i) being configured such that the first seal (17) and second seal (18) which are positioned therein produce a sealed connection between the two flanges (11a, 11b) by isolating said inner conduit (10i) from the exterior of the line, the connection assembly (10) further comprising at least one conduit (12) opening out, for the one part, between the first groove (11g) and the second groove (11i), and opening out, for the other part, into an expansion chamber (13) for said cryogenic fluid, said expansion chamber being arranged in one of the first connection flange (11a) and the second connection flange (11b), **characterized by** the expansion chamber (13) comprising an absorbent element and a detector for detecting the presence of said cryogenic fluid or a recess configured for the installation of such a detector.

2. Connection assembly (10) according to the preceding claim, wherein the first and second grooves are configured to house O-ring seals.

3. Connection assembly according to either of Claims 1 and 2, wherein several conduits (12, 12', 12", 12‴) each open out, for the one part, between the first groove (11g) and the second groove (1 1i), and open out, for the other part, into said cryogenic fluid expansion chamber (13).

4. Connection assembly (10) according to one of Claims 1 to 3, wherein an end of a conduit (12) opening out between the first and second grooves opens out at the bottom of a slot (12a) arranged in one of the first flange (11a) and second flange (11b), between the first groove (11g) and second groove (11i).

5. Connection assembly (10) according to one of the preceding claims, wherein at least one of the first flange (11a) and second flange (11b) comprises a third groove (11k) for positioning a third seal, said third groove having a diameter smaller than the diameter of said first groove (11g) and being arranged between said inner conduit (11i) and said first groove (11g).

6. Distribution system for distributing a cryogenic fluid, comprising at least one connection assembly (10) according to one of Claims 1 to 5.

7. Aircraft (1) comprising a connection assembly (10) according to one of Claims 1 to 5 or a distribution system for distributing a cryogenic fluid according to Claim 6.
